# EUROPÄISCHE PATENTANMELDUNG

(11) **EP 4 361 117 A1**
(43) Veröffentlichungstag der Anmeldung: **01.05.2024**
(21) Anmeldenummer: 23205547.5
(22) Anmeldetag: 24.10.2023
(51) Int. Cl.: C04B 28/14, C04B 7/02, C04B 26/02, C04B 28/02, C04B 28/10

(54) **VERFAHREN ZUM BEHANDELN VON KOHLE, BEHANDELTE KOHLE, VERFAHREN ZUM HERSTELLEN EINES BAUSTOFFS, BAUSTOFF, VERFAHREN ZUM HERSTELLEN EINES ERZEUGNISSES UND ERZEUGNIS**

(30) Priorität: 25.10.2022 DE 102022128244
(71) Anmelder: Team Nachhaltigkeit Consulting GmbH, 72074 Tübingen (DE); Stang, André, 26135 Oldenburg (DE)
(72) Erfinder: STANG, André, 26135 Oldenburg (DE)
(74) Vertreter: Jabbusch, Matthias

(57) **Zusammenfassung**

Die Erfindung betrifft ein Verfahren zum Behandeln von Kohle. Erfindungswesentlich wird die Kohle mit einer Lösung behandelt, die wenigstens eine die Wasseraufnahmefähigkeit der Kohle herabsetzende Substanz enthält. Weiter betrifft die Erfindung die mit dem Verfahren behandelte Kohle, ein Verfahren zum Herstellen eines Baustoffs, einen mit dem Verfahren hergestellten Baustoff, ein Verfahren zum Herstellen eines Erzeugnisses und ein mit diesem Verfahren hergestelltes Erzeugnis. Bei dem Verfahren zum Herstellen eines Baustoffs wird der Baustoff mit einem Bindemittel und Zuschlagstoffen hergestellt, wobei dem Bindemittel oder einem mit dem Bindemittel und den Zuschlagstoffen hergestellten Zwischenprodukt die behandelte Kohle beigemischt wird. Bei dem Verfahren zum Herstellen eines Erzeugnisses wird der Baustoff in eine für das herzustellende Erzeugnis gewünschte Form gebracht, bindet nachfolgend chemisch ab und härtet dadurch.

## Beschreibung

Die Erfindung betrifft ein Verfahren zum Behandeln von Kohle nach dem Oberbegriff des Patentanspruchs 1. Die Erfindung betrifft außerdem mit dem Verfahren behandelte Kohle nach dem Patentanspruch 6. Weiter betrifft die Erfindung ein Verfahren zum Herstellen eines Baustoffs nach dem Oberbegriff des Patentanspruchs 7 sowie einen damit hergestellten Baustoff nach dem Patentanspruch 11. Ferner betrifft die Erfindung ein Verfahren zum Herstellen eines Erzeugnisses mit dem erfindungsgemäßen Baustoff nach dem Patentanspruch 12 und ein damit hergestelltes Erzeugnis nach dem Patentanspruch 15.

Die Kohle ist insbesondere synthetische Kohle oder Synthesekohle, also Kohle, die in sauerstoff limitierter Atmosphäre aus organischem Material hergestellt wurde. Für Synthesekohle werden zunehmend weitere Verwendungsmöglichkeiten erschlossen, bei denen ansonsten gebräuchliche Substanzen zumindest teilweise durch die Synthesekohle ersetzt werden. Bei bekannten Verwendungen von Synthesekohle in verschiedenen Baustoffen hat sich jedoch gezeigt, dass sich hierdurch die physikalischen Eigenschaften der Baustoffe oder von mit den Baustoffen hergestellten Erzeugnissen, wie Bauteilen, verschlechtern können. Beispielsweise weisen Bauteile, die herkömmliche Synthesekohle enthalten, eine gegenüber entsprechenden, jedoch ohne Synthesekohle hergestellten Bauteilen geringere Druckfestigkeit auf.

Der Erfindung liegt die Aufgabe zugrunde, die physikalischen Eigenschaften von Baustoffen und Erzeugnissen, die Kohle enthalten, zu verbessern. Insbesondere sollen hierfür ein Verfahren zum Behandeln von Kohle, eine mit dem Verfahren behandelte Kohle, ein Verfahren zum Herstellen eines Baustoffs, ein mit dem Verfahren hergestellter Baustoff, ein Verfahren zum Herstellen eines Erzeugnisses und ein damit hergestelltes Erzeugnis angegeben werden.

Die Erfindung löst diese Aufgabe mit einem Verfahren nach dem Patentanspruch 1, mit behandelter Kohle nach dem Patentanspruch 6, mit einem Verfahren zum Herstellen eines Baustoffs nach dem Patentanspruch 7, mit einem damit hergestellten Baustoff nach dem Patentanspruch 11, mit einem Verfahren zum Herstellen eines Erzeugnisses nach dem Patentanspruch 12 und mit einem Erzeugnis nach dem Patentanspruch 15. Vorteilhafte Ausführungsformen der Erfindung sind in den Unteransprüchen angegeben.

Bei einem Verfahren zum Behandeln von Kohle ist erfindungswesentlich vorgesehen, dass die Kohle mit einer Lösung behandelt wird, die wenigstens eine die Wasseraufnahmefähigkeit der Kohle herabsetzende Substanz enthält. Nach der Behandlung mit der Lösung wird die Kohle vorzugsweise getrocknet. Die in der Lösung enthaltenen Substanzen benetzen die Oberfläche der Kohle und umschließen die Oberfläche zumindest teilweise. Insbesondere wird die Oberfläche der Kohle derart modifiziert, dass die Aufnahme von Wasser reduziert oder vollständig unterbunden wird. Dadurch erschließen sich neue Einsatzmöglichkeiten der Kohle, bei denen eine starke Wasseraufnahme in der Kohle unerwünscht ist.

Die erfindungsgemäß behandelte Kohle ist mit dem erfindungsgemäßen Verfahren zum Behandeln von Kohle behandelt und weist dadurch eine Oberfläche, mittels welcher die Wasseraufnahmefähigkeit der behandelten Kohle verglichen mit der Wasseraufnahmefähigkeit der unbehandelten Kohle herabgesetzt ist, auf.

Bei Baustoffen, die von sich aus eine stark begrenzte Aufnahmefähigkeit von Wasser aufweisen, kann bekanntermaßen die Aufnahmefähigkeit von Wasser durch die Behandlung mit bestimmten Substanzen noch weiter reduziert werden. Überraschend ist, dass Kohle, die von sich aus eine vergleichsweise große Menge Feuchtigkeit speichern kann, durch die erfindungsgemäße Behandlung mit der Lösung völlig neue Eigenschaften erhält, mit denen die behandelte Kohle in Bereichen eingesetzt werden kann, in denen ein Einsatz unbehandelter Kohle bisher nur eingeschränkt möglich war. Bevorzugte Einsatzzwecke der behandelten Kohle sind die Baustoffindustrie und die Kunststoffindustrie. Als Zusatz in Baustoffen kann die erfindungsgemäß behandelte Kohle andere Zusätze zumindest teilweise ersetzen, die mitunter nur unter großem energetischem Aufwand bereitgestellt werden können. Baustoffe und mit den Baustoffen hergestellte Erzeugnisse können dadurch mit einem besseren CO2-Fußabdruck produziert werden.

Bei besonders bevorzugten Ausführungsformen des erfindungsgemäßen Verfahrens zum Behandeln von Kohle ist vorgesehen, dass die Lösung Wasserglas enthält. Wasserglas ist eine die Wasseraufnahmefähigkeit der Kohle herabsetzende Substanz. Wasserglas liegt hierbei insbesondere als wässrige Lösung vor. Insbesondere ist das Wasserglas Natronwasserglas oder Kaliwasserglas oder Lithiumwasserglas, ist also eine Lösung, die auf Natrium, Kalium oder Lithium basiert und Wasser enthält.

Bei bevorzugten Ausführungsformen des erfindungsgemäßen Verfahrens zum Behandeln von Kohle ist vorgesehen, dass die Lösung wenigstens eine hydrophobe oder oleophobe Substanz enthält. Auch die wenigstens eine hydrophobe oder oleophobe Substanz ist eine die Wasseraufnahmefähigkeit der Kohle herabsetzende Substanz und ist insbesondere eine Substanz aus Silikonen, Ölen, Silikonaten, Siloxanen, Carboxylaten, Silanen und Wachsen. Bei weiteren Ausführungsformen enthält die Lösung genau eine dieser Substanzen oder genau zwei dieser Substanzen oder genau drei dieser Substanzen oder genau vier dieser Substanzen oder alle fünf Substanzen. Die Oberfläche erhält hierdurch wasserabweisende Eigenschaften sowie alternativ oder zusätzlich ölabweisende Eigenschaften. Insbesondere weist die Oberfläche der behandelten Kohle vorzugsweise hydrophobe und/oder oleophobe Eigenschaften auf.

Die Lösung kann auf verschiedene Weise an die Oberfläche der Kohle gebracht werden. Bei einer bevorzugten Ausführungsform des erfindungsgemäßen Verfahrens wird die Kohle mit der Lösung besprüht. Alternativ oder zusätzlich wird die Kohle in der Lösung getränkt.

Die Kohle ist besonders bevorzugt synthetische Kohle, alternativ auch Synthesekohle genannt, die durch thermochemische Konversion, insbesondere Pyrolyse, aus Pflanzenteilen oder anderen organischen Rest- oder Abfallstoffen oder Kunststoffen gewonnen wird.

Die synthetische Kohle wird somit insbesondere aus nachwachsenden Rohstoffen hergestellt. Pflanzen nehmen während des Wachstums Kohlendioxid aus der Luft auf. Im Rahmen der Photosynthese wird dieses Kohlendioxid zunächst in Glucose und im weiteren Verlauf zu komplexen Verbindungen wie zum Beispiel Cellulose, Hemicellulose und Lignin synthetisiert. Die zahlreichen und komplexen Kohlenstoffatome in diesen Verbindungen werden unter dem Einfluss hoher Temperaturen aufgebrochen. Es entstehen dabei kurze Bruchstücke wie z.B. Gase die als Gemisch brennbar sind, insbesondere Pyrolysegas. Darüber hinaus wird der in den Molekülen vorhandene Kohlenstoff isoliert und liegt am Prozessende als hochreiner Kohlenstoff vor, der dann die Synthesekohle bildet und erfindungsgemäß in dem Verfahren zum Behandeln von Kohle bearbeitet werden kann. Derart aus Pflanzen oder Pflanzenteilen hergestellte Synthesekohle kann auch als Pflanzenkohle bezeichnet werden.

Zur Herstellung von aus Kunststoffen hergestellter synthetischer Kohle, die im erfindungsgemäßen Verfahren zum Behandeln von Kohle verwendet werden kann, werden Kunststoffe pyrolytisch verwertet. Geeignete Kunststoffe hierfür sind beispielsweise Polyethylen, Polypropylen, Polybutadien, Polystyrol, Polyvinylchlorid, Polyacrylnitril, Polytetraflourethen, Polyacrylsäureester, Polymethacrylsäureester, Polyamid, Polyester, Polycarbonate, Formaldehydharze, Silicone, Epoxidharze, und Polyurethane sowie alle GFK und CFK Materialien. Durch die mit der Erfindung bewirkte dauerhafte Kohlenstofffixierung wird die CO¬2-Freisetzung, die bei einer Verbrennung der synthetischen Kohle oder der für die Herstellung der synthetischen Kohle verwendeten Ausgangsstoffe erfolgen würde, vermieden. Es werden also CO2-Senken provoziert.

Bei einem Verfahren zum Herstellen eines Baustoffs, der mit einem Bindemittel und Zuschlagstoffen hergestellt wird, ist erfindungswesentlich vorgesehen, dass dem Bindemittel oder einem mit dem Bindemittel und den Zuschlagstoffen hergestellten Zwischenprodukt erfindungsgemäß behandelte Kohle beigemischt wird, also Kohle beigemischt wird, die mit dem erfindungsgemäßen Verfahren zum Behandeln von Kohle behandelt ist und dadurch eine Oberfläche, welche für eine herabgesetzte Wasseraufnahmefähigkeit der Kohle sorgt und welche vorzugsweise auch hydrophob und oleophob ist, aufweist. Optional wird die behandelte Kohle hierfür zunächst zerkleinert. Alternativ wird die Kohle bereits zerkleinert bevor die Kohle erfindungsgemäß mit der Lösung, die Wasserglas enthält, behandelt wird.

Vorzugsweise ist das Bindemittel ein mineralisches Bindemittel, insbesondere Zement oder Kalk oder eine Mischung aus Zement und Kalk oder Gips, oder ein polymerbasiertes Bindemittel oder ein organisches Bindemittel, insbesondere Kunstharz.

Der mit dem Bindemittel hergestellte Baustoff ist bei einer Ausführungsform Beton. Bei einer weiteren Ausführungsform ist der hergestellte Baustoff Mörtel, insbesondere Zementmörtel oder Kalkmörtel oder Kalk-Zementmörtel oder Trockenmörtel oder Dünnbettmörtel oder Schamottemörtel oder Gipsmörtel oder Fliesenmörtel oder Putzmörtel. Gemäß einer alternativen Ausführungsform ist der hergestellte Baustoff mineralisch oder mit Kunststoff gebundener Putz, insbesondere Kunstharzputz. Bei noch einer anderen Ausführungsform ist der hergestellte Baustoff Lack.

Bei einer Ausführungsform des Verfahrens, bei der das Bindemittel Zement enthält, ist vorzugsweise vorgesehen, dass aus dem Bindemittel, den Zuschlagstoffen und Wasser zunächst ein Zementleim als Zwischenprodukt hergestellt wird.

Der erfindungsgemäße Baustoff ist mit dem erfindungsgemäßen Verfahren zum Herstellen von Baustoffen hergestellt, enthält also die erfindungsgemäße Kohle, die mit dem erfindungsgemäßen Verfahren behandelt ist, und ist insbesondere Beton, Mörtel, Putz oder Lack. Mit dem erfindungsgemäßen Baustoff können Erzeugnisse wie Bauteile oder Beschichtungen hergestellt werden.

Bei dem erfindungsgemäßen Verfahren zum Herstellen eines Erzeugnisses wird der erfindungsgemäße Baustoff, also insbesondere der mit dem erfindungsgemäßen Verfahren zum Herstellen von Baustoffen hergestellte Baustoff, in eine für das herzustellende Erzeugnis gewünschte Form gebracht, bindet nachfolgend chemisch ab und härtet dadurch. Das Erzeugnis ist insbesondere ein Bauteil oder eine Beschichtung. Beispielsweise wird ein zementhaltiger Baustoff zur Herstellung eines Bauteils in eine Form gegossen oder wird ein Lack zur Herstellung einer Beschichtung auf einen Gegenstand aufgebracht.

Bei einer Ausführungsform, bei der das Bindemittel zur Herstellung des Baustoffs Zement enthält und bei der zunächst ein Zementleim hergestellt wird, ist vorzugsweise vorgesehen, dass aus Wasser, Sand, Kies und dem Zementleim der Baustoff Beton hergestellt wird und dass damit das Erzeugnis aus gehärtetem Beton hergestellt wird.

Optional werden zum zementhaltigen Bindemittel oder dem Zementleim, bevor der Zementleim abbindet, Betonverflüssiger beigemischt, die eine dispergierende oder grenzflächenaktive Wirkung haben und daher für eine Wassereinsparung sorgen.

Bei einer hierzu alternativen Ausführungsform ist bevorzugt vorgesehen, dass der Baustoff für das Erzeugnis mit einem polymerbasierten Bindemittel hergestellt wird und dass damit das Erzeugnis hergestellt wird, wobei das Erzeugnis ein polymerbasiertes Erzeugnis, insbesondere Polymerbeton, oder eine Beschichtung, beispielsweise aus Lack, ist.

Schutz beansprucht ist auch für ein Erzeugnis, das mit dem erfindungsgemäßen Verfahren zum Herstellen eines Erzeugnisses hergestellt ist. Dem Baustoff oder dem fertiggestellten Erzeugnis können im Ergebnis bis zu 95% erfindungsgemäß behandelte Kohle beigemischt sein. Bevorzugt für optimale physikalische Eigenschaften beträgt der Anteil erfindungsgemäß behandelter Kohle im Baustoff oder im Erzeugnis jedoch zwischen 1% und 10%. Das Erzeugnis, insbesondere das Bauteil, ist so auch mit der beigemischten Kohle hochstabil.

Weitere Ausführungsformen ergeben sich aus den Patentansprüchen, aus den beigefügten Zeichnungen und aus der nachfolgenden Beschreibung eines in den Zeichnungen veranschaulichten und besonders bevorzugten Ausführungsbeispiels der Erfindung. In den Zeichnungen zeigen:
- Fig. 1:: Ein Diagramm zur Veranschaulichung des erfindungsgemäßen Verfahrens zum Behandeln von Kohle gemäß einem Ausführungsbeispiel der Erfindung; und

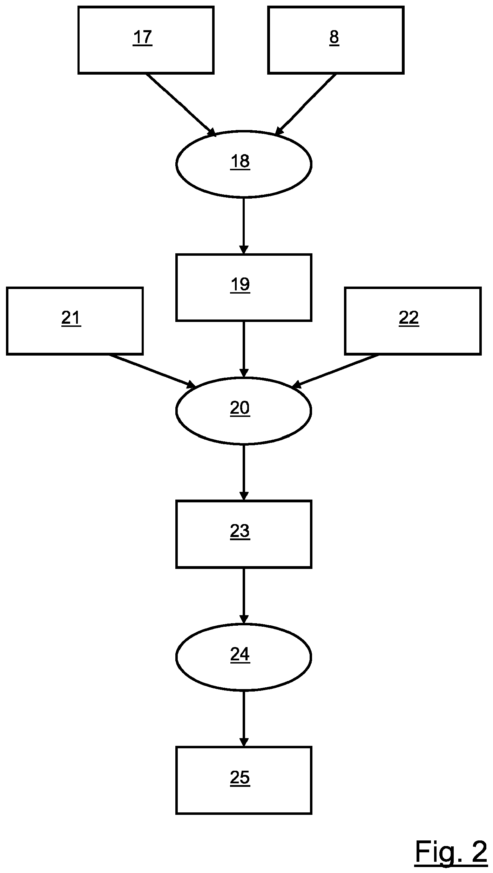

- Fig. 2:: Ein Diagramm zur Veranschaulichung des erfindungsgemäßen Verfahrens zum Herstellen eines Erzeugnisses mit der gemäß dem Verfahren von Fig. 1 behandelten Kohle gemäß einem Ausführungsbeispiel der Erfindung.

Aus Pflanzenteilen 1 wird durch thermochemische Konversion, insbesondere Pyrolyse 2, zunächst noch unbehandelte Kohle 3 in Form von synthetischer Kohle gewonnen. Alternativ kann auch andere unbehandelte Kohle, die beispielsweise auf gleiche Weise aus anderen organischen Rest- und Abfallstoffen oder aus Kunststoffen gewonnen wird, als Ausgangsstoff verwendet werden. Die unbehandelte Kohle 3 wird erfindungsgemäß in einem Schritt 4 mit einer Lösung 5 behandelt. Dabei wird die unbehandelte Kohle 3 mit der Lösung 5 besprüht. Alternativ oder zusätzlich wird die unbehandelte Kohle 3 in der Lösung 5 getränkt. Als Ergebnis der Behandlung 4 wird behandelte und zunächst noch feuchte Kohle 6 erhalten, die nach einem Trocknungsvorgang 7 zu der verfahrensmäßig gewünschten behandelten Kohle 8 mit einer vorzugsweisen hydrophoben und vorzugsweise auch oleophoben Oberfläche wird. Die Lösung 5 zum Behandeln der unbehandelten Kohle 3 enthält im Ausführungsbeispiel Wasserglas 9 sowie weitere hydrophobe oder oleophobe Substanzen 10, die in einem Schritt 11 zur Herstellung der Lösung 5 mit dem Wasserglas 9 gemischt werden.

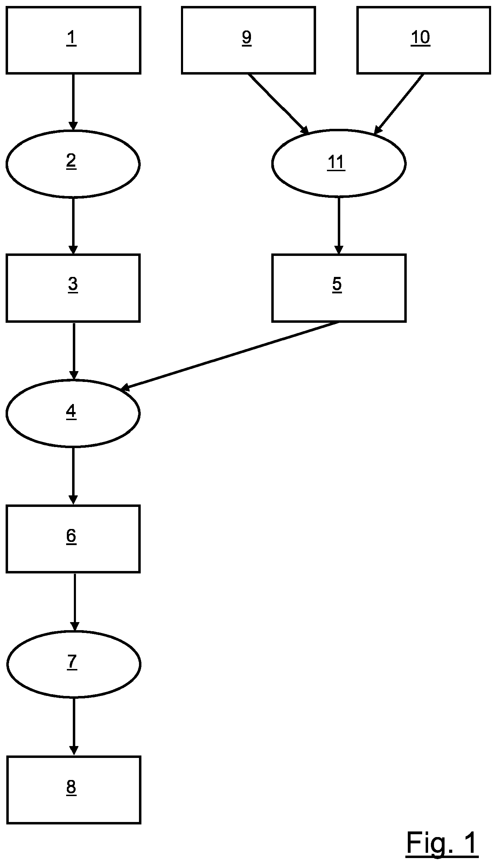

Das erfindungsgemäße Verfahren zum Herstellen eines Erzeugnisses beinhaltet ein erfindungsgemäßes Verfahren zum Herstellen eines Baustoffs, welches auf dem in Fig. 1 veranschaulichten Verfahren zum Behandeln von Kohle 3 aufbaut und insbesondere die Behandlung 4 der unbehandelten Kohle 3 mit der Lösung 5, die Wasserglas 9 enthält, beinhaltet. Mit dem hier beispielhaft beschriebenen Verfahren wird ein Erzeugnis aus Beton hergestellt. Dafür wird ein zementhaltiges Bindemittel 17 in einem Schritt 18 mit der behandelten Kohle 8 gemischt. Die als Ergebnis hieraus erhaltene Mischung 19 aus dem zementhaltigen Bindemittel 17 und der behandelten Kohle 8 wird in einem Schritt 20 mit Zuschlagstoffen 21 und Wasser 22 gemischt, so dass ein Zementleim 23 entsteht, mit dem der Baustoff Beton hergestellt wird. Der noch nicht gehärtete Beton wird in eine Form gegeben und wird nach einem Schritt 24 zu einem gehärteten Erzeugnis 25 in Form eines Bauteils aus Beton. Die behandelte Kohle 8 im gehärteten Erzeugnis 25 ersetzt zu einem Teil die ansonsten in größeren Anteilen enthaltenen Zuschlagstoffe 21.

## Patentansprüche

1. Verfahren zum Behandeln von Kohle (3),
**dadurch gekennzeihnet,**
dass die Kohle (3) mit einer Lösung (5) behandelt wird, die wenigstens eine die Wasseraufnahmefähigkeit der Kohle herabsetzende Substanz enthält.

2. Verfahren nach Anspruch 1, **dadurch gekennzeichnet, dass** die Lösung (5) Wasserglas (9) enthält, insbesondere Natronwasserglas oder Kaliwasserglas oder Lithiumwasserglas enthält.

3. Verfahren nach einem der vorherigen Ansprüche, **dadurch gekennzeichnet, dass** die Lösung (5) wenigstens eine hydrophobe oder oleophobe Substanz (10) enthält, insbesondere wenigstens eine Substanz (10) aus Silikonen, Ölen, Silikonaten, Siloxanen, Carboxylaten, Silanen und Wachsen enthält.

4. Verfahren nach einem der vorherigen Ansprüche, **dadurch gekennzeichnet, dass** die Kohle (3) mit der Lösung (5) besprüht oder in der Lösung (5) getränkt wird.

5. Verfahren nach einem der vorherigen Ansprüche, **dadurch gekennzeichnet, dass** die Kohle (3) synthetische Kohle ist, die durch thermochemische Konversion (2), insbesondere Pyrolyse, aus Pflanzenteilen (1) oder anderen organischen Rest- oder Abfallstoffen oder Kunststoffen gewonnen wird.

6. Behandelte Kohle (8), die mit dem Verfahren nach einem der vorherigen Ansprüche behandelt ist und dadurch eine Oberfläche, mittels welcher die Wasseraufnahmefähigkeit der behandelten Kohle verglichen mit der Wasseraufnahmefähigkeit der unbehandelten Kohle herabgesetzt ist, aufweist.

7. Verfahren zum Herstellen eines Baustoffs, der mit einem Bindemittel (17) und Zuschlagstoffen (21) hergestellt wird,
**dadurch gekennzeihnet,**
dass dem Bindemittel (17) oder einem mit dem Bindemittel (17) und den Zuschlagstoffen (21) hergestellten Zwischenprodukt behandelte Kohle (8) nach Anspruch 7 beigemischt wird.

8. Verfahren nach Anspruch 7, **dadurch gekennzeichnet, dass** das Bindemittel (17) ein mineralisches Bindemittel (17), insbesondere Zement oder Kalk oder eine Mischung aus Zement und Kalk oder Gips, ist oder ein polymerbasiertes Bindemittel (17) ist oder ein organisches Bindemittel (17), insbesondere Kunstharz, ist.

9. Verfahren nach einem der Ansprüche 7 und 8, **dadurch gekennzeichnet, dass** der mit dem Bindemittel (17) hergestellte Baustoff Beton oder Mörtel, insbesondere Zementmörtel oder Kalkmörtel oder Kalk-Zementmörtel oder Trockenmörtel oder Dünnbettmörtel oder Schamottemörtel oder Gipsmörtel oder Fliesenmörtel oder Putzmörtel, oder mineralisch oder mit Kunststoff gebundener Putz, insbesondere Kunstharzputz, oder Lack, insbesondere Autolack, ist.

10. Verfahren nach einem der Ansprüche 7 bis 9, bei dem das Bindemittel (17) Zement enthält, **dadurch gekennzeichnet, dass** aus dem Bindemittel (17), den Zuschlagstoffen und Wasser zunächst ein Zementleim (23) als Zwischenprodukt hergestellt wird.

11. Baustoff, der mit dem Verfahren nach einem der Ansprüche 7 bis 10 hergestellt ist.

12. Verfahren zum Herstellen eines Erzeugnisses (25), bei dem ein Baustoff nach Anspruch 11 in eine für das herzustellende Erzeugnis (25) gewünschte Form gebracht wird und nachfolgend chemisch abbindet und dadurch härtet.

13. Verfahren nach Anspruch 12, **dadurch gekennzeichnet, dass** zunächst ein Zementleim (23) nach Anspruch 10 hergestellt wird, dass aus Wasser, Sand, Kies und dem Zementleim (23) der Baustoff Beton hergestellt wird und dass damit das Erzeugnis (25) aus gehärtetem Beton hergestellt wird.

14. Verfahren nach Anspruch 12, **dadurch gekennzeichnet, dass** der Baustoff für das Erzeugnis (25) mit einem polymerbasierten Bindemittel (17) hergestellt wird und dass damit das Erzeugnis (25) hergestellt wird, wobei das Erzeugnis (25) ein polymerbasiertes Erzeugnis (25), insbesondere Polymerbeton, oder eine Beschichtung, insbesondere aus Lack, ist.

15. Erzeugnis (25), das mit dem Verfahren nach einem der Ansprüche 12 bis 14 hergestellt ist.
